# EUROPÄISCHE PATENTSCHRIFT

(11) **EP 1 967 723 B1**
(45) Veröffentlichungstag und Bekanntmachung des Hinweises auf die Patenterteilung: **12.06.2019**
(21) Anmeldenummer: 08003858.1
(22) Anmeldetag: 01.03.2008
(51) Int. Cl.: F02K 7/10, F02C 7/22

(54) **Staustrahlantrieb sowie Lenkflugkörper mit einer solchen Staustrahlantrieb**
Ramjet engine and guided missile with such a ramjet engine
Statoréacteur ainsi que missiles guidés dotés d'un statoréacteur

(30) Priorität: 03.03.2007 DE 102007010349
(43) Veröffentlichungstag der Anmeldung: 10.09.2008
(73) Patentinhaber: MBDA Deutschland GmbH, 86529 Schrobenhausen (DE)
(72) Erfinder: Hetzer, Walter, 85630 Grasbrunn (DE); Lenz, Ernst, 85614 Kirchseeon (DE); Kilger, Fridbert F.J., 81541 München (DE)
(74) Vertreter: Isarpatent

(56) Entgegenhaltungen:
- CH-A- 310 038
- GB-A- 2 184 225
- US-A- 2 693 675
- US-A- 3 092 960
- US-A- 4 291 533

## Beschreibung

Die Erfindung betrifft ein Staustrahlantrieb gemäß der im Oberbegriff des Anspruches 1 angegebenen Art sowie einen Lenkflugkörper mit einem solchen Staustrahlantrieb.

Derartige Staustrahlantriebe werden für Lenkflugkörper verwendet. Die Patentschrift US 4 291 533 A zeigt einen Staustrahlantrieb gemäss dem Stand der Technik. Sie steuern in Abhängigkeit von aus Sensoren, wie Positions- und Geschwindigkeitssensoren, gewonnenen Signalen eine Treibstoffdurchflussmenge zum Antrieb des Lenkflugkörpers.

Durch einen Triebwerkabbrand können im Inneren des Lenkflugkörpers sehr hohe Temperaturen auftreten, was zu thermischen Problemen in Bezug auf eine Steuerungselektronik des Lenkflugkörpers führen kann. Außerdem erfordert die elektrische Verbindung von der Ventilsteuerungseinheit zu der zugehörigen Elektronik erhebliche Kabellängen. Dies kann jedoch EMV-Probleme mit sich bringen. Beides kann unter Umständen eine sichere Funktion des Lenkflugkörpers beeinträchtigen.

Der Erfindung liegt die Aufgabe zugrunde, ein Staustrahlantrieb nach dem Oberbegriff des Anspruches 1 zu schaffen, die unter Vermeidung der genannten Nachteile eine verbesserte Funktion aufweist.

Diese Aufgabe wird durch ein Staustrahlantrieb mit den kennzeichnenden Merkmale des Anspruches 1 in Verbindung mit seinen Oberbegriffsmerkmalen gelöst.

Durch die erfindungsgemäße Ausführung des Staustrahlantriebs mit einer Ventilbaugruppe werden praktisch alle Funktionen in einfacher Weise zentralisiert, und zwar ohne aufwändige Umkonstruktion eines Lenkflugkörpers, da eine Triebwerkzwischenstruktur ohnehin vorhanden ist. Es ist außerdem möglich, die Kontaktflächen der mechanischen Schnittstellen deutlich zu reduzieren, wobei die Ventilbaugruppe thermisch isoliert untergebracht ist, insbesondere durch Luftspalt-Isolierung. Ein Luftspalt eignet sich sehr gut zur thermischen Isolierung und sorgt außerdem für eine Materialersparnis. Die Elektronik wird gemeinsam mit der mechanischen Ventilbaugruppe innerhalb der Triebwerkzwischenstruktur angeordnet.

Ein weiterer Vorteil der Erfindung ist die Einsparung von ausgelagerten Funktionen, was zu einer Reduzierung von Datenübertragungssystemen führt.

Der erfindungsgemäße Staustrahlantrieb ist außerdem sehr robust und montagefreundlich ausgeführt, da eine sehr kompakte Ventilbaugruppe im Lenkflugkörper montiert wird.

Durch die Erfindung ist auch das Testen der kompakten Ventilbaugruppe leicht möglich.

Gemäss des erfindungsgemäßen Staustrahlantriebs ist vorgesehen, dass die Ventilbaugruppe in einem Baukörper eingebettet ist. Dadurch sind die mechanischen, elektrischen und elektromechanischen Komponenten der Ventilbaugruppe zuverlässig über den Baukörper geschützt angeordnet und können in einfacher Weise vormontiert werden. Der Baukörper mit seinen Komponenten kann in wenigen Montageschritten im Lenkflugkörper untergebracht werden.

Besonders günstig ist es, wenn die Ventilbaugruppe in einer oder mehreren Aussparungen des Baukörpers eingebettet ist, wobei der Baukörper als Formkörper ausgeführt ist. Durch diese Maßnahme lassen sich die Komponenten leicht und sicher befestigen und andererseits bilden die Aussparungen Luftkammern, die eine thermische Isolierung begünstigen, da sie nicht in unmittelbaren Kontakt mit thermisch aufgeheizten Teilen des Flugkörpers stehen. Es ergibt sich ein sehr guter thermischer Schutz, wenn der Baukörper mit einer Gehäuseeinheit mit einem einen Luftisolierspalt bildenden Gehäusedeckel versehen ist. Der Gehäusedeckel verhindert die unmittelbare Aufheizung der Komponenten und erlaubt, dass die Komponenten zugänglich sind, wenn der Gehäusedeckel entfernt wird.

In einer weiteren bevorzugten Ausführungsform der Erfindung umfasst der Staustrahlantrieb einen elektromotorischen Antrieb, insbesondere mit einem Servomotor, der mit einer Gewindespindel verbunden ist, wobei an der Gewindespindel ein in Längsrichtung der Gewindespindel verschiebbares Spindelgetriebeteil vorhanden ist, das mit einem Hebelelement bzw. einem Hebelarm mit einer Ventilwelle verbunden ist, wobei die Ventilwelle einen 90°-Winkel zur Achse des Spindelantriebes definiert. Die Gewindespindel-Servomotorlösung mit dem Hebelarm erlaubt eine sehr genaue Dosierung der Treibstoffmenge. Auch lassen sich sehr schnelle Änderungen der durch das Ventil gesteuerten Treibstoffmenge realisieren. Weiterhin schafft diese Konstruktion eine sehr platzsparende Anordnung, sodass sie auch bei relativ kleinem Durchmesser des Lenkflugkörpers einsetzbar ist.

Eine Verbesserung der Fluggenauigkeit des Lenkflugkörpers ist gegeben, wenn die Steuerelektronik-Einheit ein Regelungsteil mit einer Phasensollwerteinheit, einem Korrekturregler und einer Fehlererkennungseinheit für polare Werte umfasst, wobei die Phasensollwerteinheit an ihrem Eingang einerseits mit polarem Strom und/oder Spannungskommandos und andererseits mit einem Korrektursignal des Korrekturreglers gespeist wird, wobei der Korrekturregler mit der Fehlererkennungseinheit verbunden ist sowie die Fehlererkennungseinheit einerseits mit Soll- und Istwerten versorgt wird. Es können korrigierte Phasensollwerte einem Phasenstromregler zugeführt werden, was die Regelungseigenschaften der Regelungsfunktion des Staustrahlantriebs erheblich verbessert. Vorteilhaft ist es weiterhin, dass die Steuerelektronik-Einheit mit einer Sensoren-Schnittstelle mit einer Signalverarbeitungseinheit versehen ist, welche die Halbleiterbrückenschaltung zur Steuerung eines Antriebsmotors zur Steuerung der für den Antrieb erforderlichen Treibstoffmenge. Die Halbleiterbrückenschaltung ist ebenfalls in der kompakten Steuereinheit untergebracht, sodass lediglich externe Sensoren an der Sensoren-Schnittstelle angeschlossen werden müssen, um z.B. einen Druck in einer Verbrennungskammer zu messen.

Weitere vorteilhafte Ausgestaltungen der Erfindung sind Gegenstände der Unteransprüche.

Ein Ausführungsbeispiel wird anhand der Zeichnungen näher erläutert, wobei weitere vorteilhafte Weiterbildungen der Erfindung und Vorteile derselben beschrieben sind. Es zeigen:
- Fig. 1: eine Darstellung eines Lenkflugkörpers,
- Fig. 2: eine Darstellung einer in einem Baukörper eingebetteten erfindungsgemäßen Ventilbaugruppe für den Lenkflugkörper,
- Fig. 3a: eine perspektivische Darstellung der Ventilbaugruppe mit einer Umhüllung,
- Fig. 3b: eine perspektivische Darstellung der Ventilbaugruppe ohne die Umhüllung,
- Fig. 4: ein Blockdiagramm eines Hardwareaufbaus einer Steuerelektronikeinheit der Ventilsteuerung,
- Fig. 5: ein Blockdiagramm von Regelungsfunktionen der Ventilsteuerung, und
- Fig. 6: eine Prinzipdarstellung der Ventilbaugruppe zur Veranschaulichung von Last- und Kräftebilanzen an einem Ventilgetriebe.

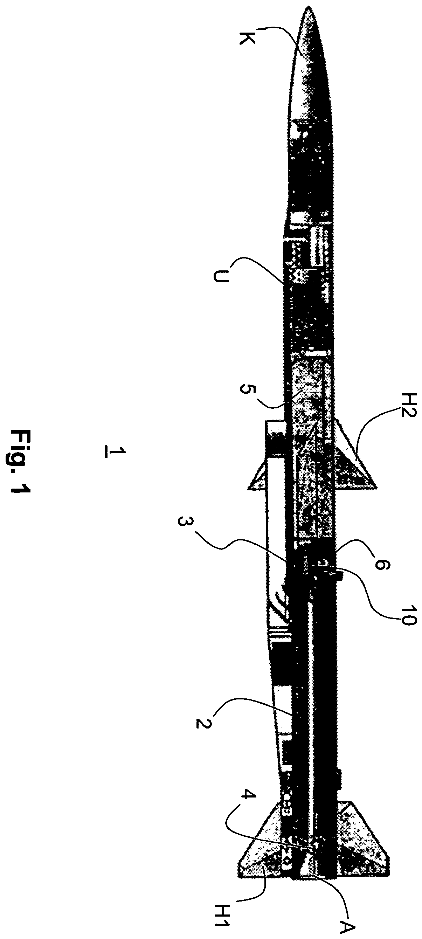

In den Figuren sind gleiche Teile mit denselben Bezugszeichen versehen. Fig. 1 zeigt einen Lenkflugkörper 1, der mit einem Staustrahlantrieb 2 versehen ist. Dieser weist einen Triebwerkzwischenraum 3 auf, der zwischen einer Verbrennungskammer 4 und einer Treibstoffkammer 5 angeordnet ist.

Der Lenkflugkörper 1 besitzt eine etwa zigarrenförmige Umhüllung U mit einem Kopfteil K und Heckflügeln H1 in der Nähe einer Austrittsdüse A sowie weitere Flügel H2 zum Beispiel etwa in der Mitte des Flugkörpers 1.

Der Lenkflugkörper 1 kann mit einer Sprengladung zur Zerstörung eines Zielobjektes ausgeführt sein, aber auch ohne Sprengladung versehen sein, sodass die Zerstörung des Zielobjektes nur durch kinetische Energie der Flugbewegung des Lenkflugkörpers erfolgt.

Ein Ventil 6, der nicht im Detail dargestellt ist, ist zur Steuerung einer für den Antrieb des Lenkflugkörpers 1 erforderlichen Treibstoffmenge vorgesehen. Das Ventil ist mit einer Ventilstelleinheit 7 ausgeführt, wobei diese mit einer später näher erläuterten Steuerelektronik-Einheit 8 betätigbar ausgeführt ist.

Erfindungsgemäß ist das Ventil 6 mit seiner Ventilstelleinheit 7 und seiner Steuerelektronik-Einheit 8 zu einer thermisch isolierten Ventilbaugruppe 10 zusammengefasst. Die Ventilbaugruppe 10 ist hierbei zur Anordnung in dem Triebwerkzwischenraum 3 ausgeführt.

Vorzugsweise ist der überwiegende Teil der Ventilbaugruppe 10 durch einen Luftspalt gegenüber den weiteren Komponenten des Lenkflugkörpers isoliert angeordnet, sodass die von der Verbrennungskammer 4 auftretende Hitze durch den Luftspalt von empfindlichen Teilen der Ventilsteuerung, insbesondere ihrer Elektronik, ferngehalten wird.

Nach der bevorzugten Ausführungsform ist die Ventilbaugruppe 10 in einem Baukörper 11 eingebettet, der den Luftspalt zur Ventilbaugruppe durch Abstandhalter/Auflager gewährleistet. Die Ventilbaugruppe 10 ist in einer oder mehreren Aussparungen 12 des Baukörpers 11 eingebettet. Der Baukörper 11 ist als Formkörper ausgeführt. Dieser hat die Form einer Zylinderscheibe, die im Triebwerkzwischenraum 3 untergebracht ist und deren Achse mit der Längsachse des Flugkörpers übereinstimmt.

Durch die Zentralisierung der Elektronik mit dem elektromechanischen Ventilstellantrieb einerseits und der Einbettung der Ventilbaugruppe 10 in dem Baukörper 11 andererseits ergibt sich eine sehr kompakte Ausgestaltung dieser Funktionsgruppe.

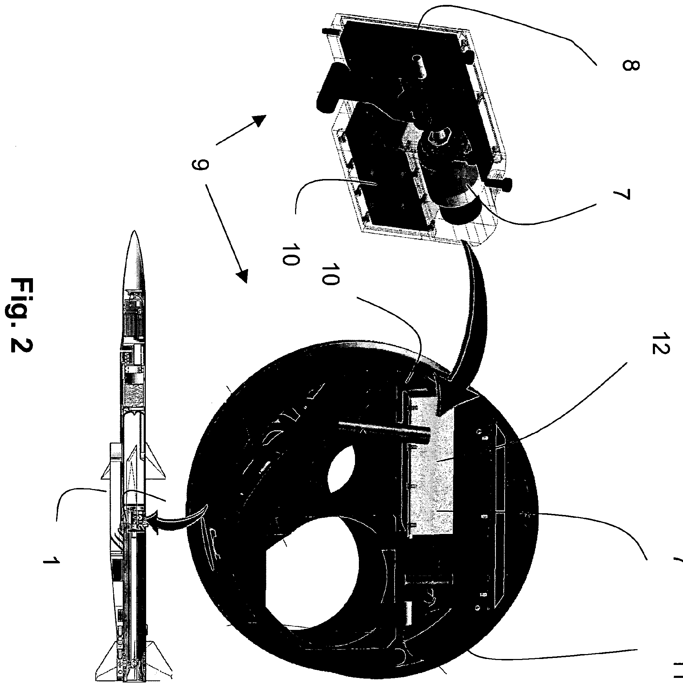

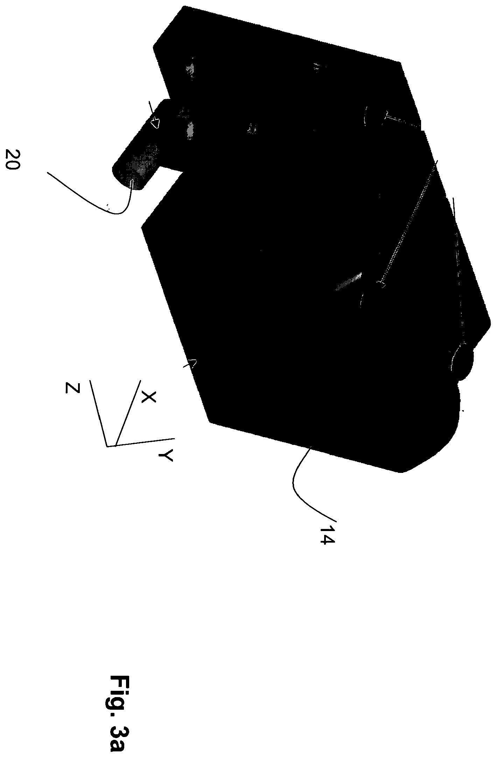

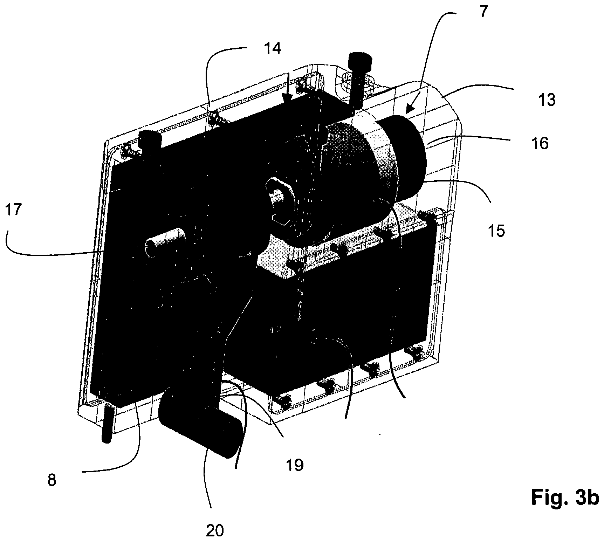

Die räumliche Anordnung der Steuerelektronik-Einheit 8 ist in den Figuren 2 und 3a bzw. 3b veranschaulicht.

Der Baukörper 11 ist nämlich mit einer darin befindlichen Gehäuseeinheit 13 mit einem einen Luftisolierspalt zur Ventilbaugruppe 10 bildenden Gehäusedeckel 14 versehen. Die Gehäuseeinheit 13 bildet eine thermisch isolierende Umhüllung. Außerdem wird die Gehäuseeinheit zur elektromagnetischen Abschirmung genutzt, um die EMV-Verträglichkeit zu verbessern.

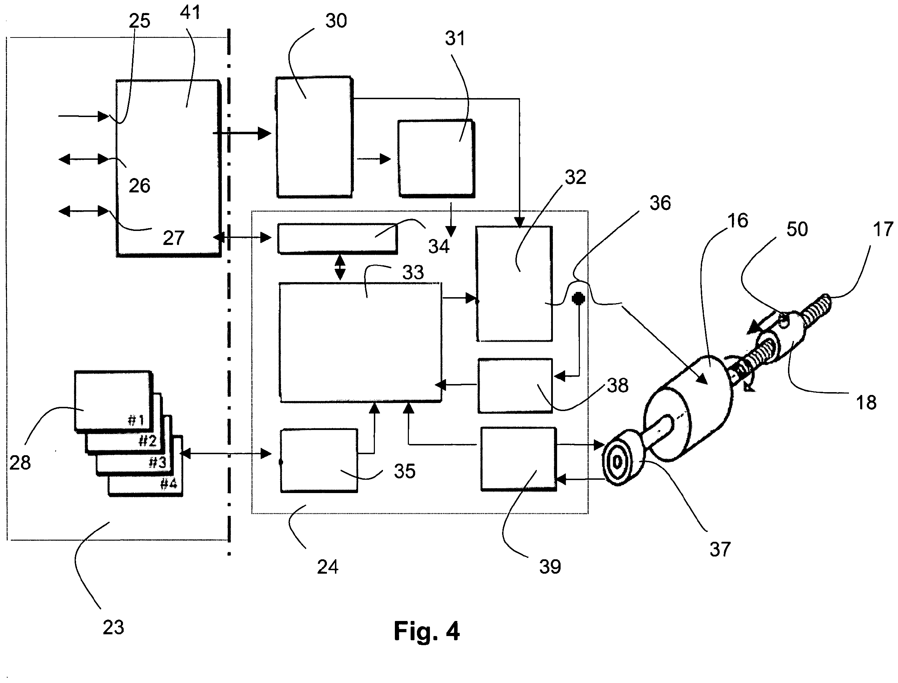

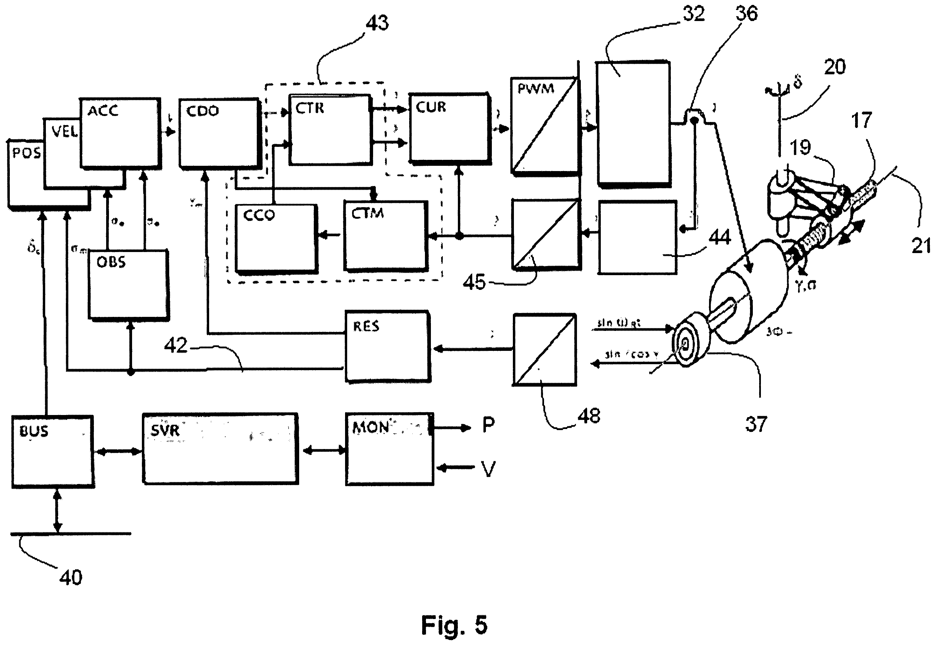

Wie in der Fig. 3b und in Fig. 4 dargestellt ist, umfasst die Ventilstelleinheit 7 einen elektromotorischen Antrieb 15, und zwar insbesondere mit einem Servomotor 16. Dieser ist, wie Fig. 4 zeigt, mit einer Gewindespindel 17 verbunden, die mit der Motorwelle fluchtet bzw. mit dieser unmittelbar verbunden ist. Weiterhin ist rechts in Fig. 4 zu sehen, dass an der Gewindespindel 17 ein in Längsrichtung der Gewindespindel verschiebbares Spindelgetriebeteil 18 vorhanden ist. Das Spindelgetriebeteil 18 ist wiederum mit einem Hebelelement 19 mit einer Ventilwelle 20 verbunden, die rechts in Fig. 5 zu erkennen ist. Die Ventilwelle definiert einen 90°-Winkel zur Achse 21 des Spindelantriebes. Bei dem in Fig. 3a unten dargestellten Koordinatensystem X, Y, Z entspricht die X-Achse der Achse der Ventilwelle 20 und die Z-Achse der Achse der Gewindespindel 17. Die X-Achse entspricht auch der Flugrichtung des Flugkörpers 1. Die Y-Achse entspricht etwa dem Verlauf des Hebelelementes 19.

Die Figuren 4 und 5 veranschaulichen außerdem die Elektronik zur Ventilsteuerung bzw. Ventilregelung.

Links in Fig. 4 sind Hardwareteile 23 vorhanden, die außerhalb der Ventilbaugruppe 10 aber innerhalb des Baukörpers 11 angeordnet sind, also noch in der Zwischenstruktur bzw. in dem Triebwerkzwischenraum 3. Hierzu gehören insbesondere eine Einheit 41, die einen DC-Versorgungseingang 25, einen Datenbusanschluss 26 und einen Testsignalanschluss 27 aufweist.

Weiterhin sind mehrere Sensoren 28 in der Zwischenstruktur vorhanden, so zum Beispiel drei Drucksensoren #1 - #4 zum Messen eines Gasgeneratordruckes und ein Drucksensor zur Druckmessung in der Verbrennungskammer 4.

In der Gehäuseeinheit bzw. dem Gehäuseteil 13 ist die Hardware 24 untergebracht, die rechts in Fig. 4 dargestellt ist. Sie besteht aus einem mit der Einheit 41 verbindbaren Spannungsversorgungs-Filter 30 und einem DC/DC-Wandler 31, der an dem Filter 30 angeschlossen ist, sodass eine autarke Versorgungsspannung für eine Halbleiterbrückenschaltung 32 zur Antriebssteuerung des Servomotors 16 vorhanden ist.

Die Halbleiterbrückenschaltung 32 ist mit der in der Gehäuseeinheit bzw. dem Gehäuseteil 13 befindlichen Signalverarbeitungseinheit 33 elektrisch verbunden. Diese besitzt eine Schnittstelle 34 für die Einheit 24 und eine Sensorschnittstelle 35. Die Signalverarbeitungseinheit 33 umfasst Regelungsschleifen, eine Sensorverarbeitung und eine Überwachungsfunktion sowie Selbsttestfunktionen. Zudem ist die Signalverarbeitungseinheit 33 mit einem Strommesssensor 36 zur Strommessung des Servomotors 16 sowie mit einem Winkelsensor 37 zur Winkelmessung des Servomotors 16 elektrisch verbunden. Die Bezugszeichen 38, 39 kennzeichnen die entsprechenden Schnittstellen.

Vorzugsweise ist der Servomotor 16 als bürstenloser, dreiphasiger Motor ausgeführt. Der Winkelsensor 37 - Resolver - ist ebenfalls bürstenlos, sodass keine Funkengefahr von diesem ausgeht.

Die Fig. 4 zeigt also eine Steuerelektronik-Einheit mit mehreren Sensoren-Schnittstellen - Sensoren 28, 36, 37 - und mit der Signalverarbeitungseinheit 33. Die Fig. 4 zeigt auch die Halbleiterbrückenschaltung 32 zur Steuerung des Antriebs- bzw. Servomotors 16 zur Steuerung der für den Antrieb erforderlichen Treibstoffmenge.

Regelungsfunktionen sowie weitere Signalflüsse der Ventilbaugruppe 10 sind in Fig. 5 dargestellt.

Die Ventilbaugruppe 10 umfasst einen Positions-Regler POS, einen Geschwindigkeitsregler VEL und ein Beschleunigungsregler ACC. Der Positionsregler POS erhält Signale über einen Datenbus 40 einerseits und einen Geber-Signal-Aufbereitungsmodul RES andererseits, der ein mechanisches Motorwinkelsignal liefert - Signalleitung 42. Das Modul RES ist mittelbar mit dem Sensor 37 verbunden, und zwar über einen Sinusgeneratormodul 48.

Der Positionsregler kann z. B. auf GPS-Basis funktionieren.

Die Regler VEL und ACC sind mit einem Beobachter-Modul OBS verbunden, der an das Modul RES angeschlossen ist. Die Regler ACC, VEL, POS liefern Signale an das Modul CDO, das polare Strom und- Spannungskommandos liefert. Das Modul CDO enthält auch ein Motorwinkelsignal vom Modul RES.

Besonders vorteilhaft ist es, dass die Steuerelektronik-Einheit ein Regelungsteil 43 mit einer Phasensollwerteinheit CTR, einem Korrekturregler CCO und einer Fehlererkennungseinheit CTM für die polare Werte umfasst. Die Phasensollwerteinheit CTR wird an ihrem Eingang einerseits mit polarem Strom und/oder Spannungskommandos und andererseits mit einem Korrektursignal des Korrekturreglers CCO gespeist. Weiterhin ist der Korrekturregler CCO mit der Fehlererkennungseinheit CTM verbunden. Die Fehlererkennungseinheit CTM wird mit Soll- und Istwerten versorgt.

Das Modul CTR ist mit einem Phasenstromregler CUR verbunden, sodass dieser die Halbleiterbrücke 32 über die PWM-Steuerung steuern kann.

Die Steuerelektronik-Einheit weist drei Stromsensoren 36 zur Messung des dreiphasigen Motorstromes des Servomotors auf, die zur Überwachung und/oder Korrektur des Motorstromes vorgesehen sind, wobei der Messstrom der Signalverarbeitungseinheit 33 zugeführt wird.

Die vom Sensor 36 gelieferten dreiphasigen Messwerte werden durch eine Einheit 44 moduliert und anschließend durch eine Einheit 45 demoduliert, sodass eine Potenzialtrennung stattfindet. Eine Potentialtrennung auf diese Weise findet auch zwischen einem PWM-Modul - Pulsbreitenmodulation - und der Halbleiterbrücke 32 statt. Die Steuerelektronik-Einheit weist also eine Potentialtrennung zwischen der Halbleiterbrücke und der Signalverarbeitungseinheit 33 auf.

Der Datenbus 40 ist außerdem an einer Bufferüberwachung BUS angeschlossen, die mit einer Steuerungsüberwachung SVR und einem Realtimemonitor MON verbunden, und zwar für Parameter P und Variablen V.

Insbesondere sorgt die Signalaufbereitung mit den Modulen CTR, CCO und CTM für eine sehr hohe Zielgenauigkeit des Lenkflugkörpers.

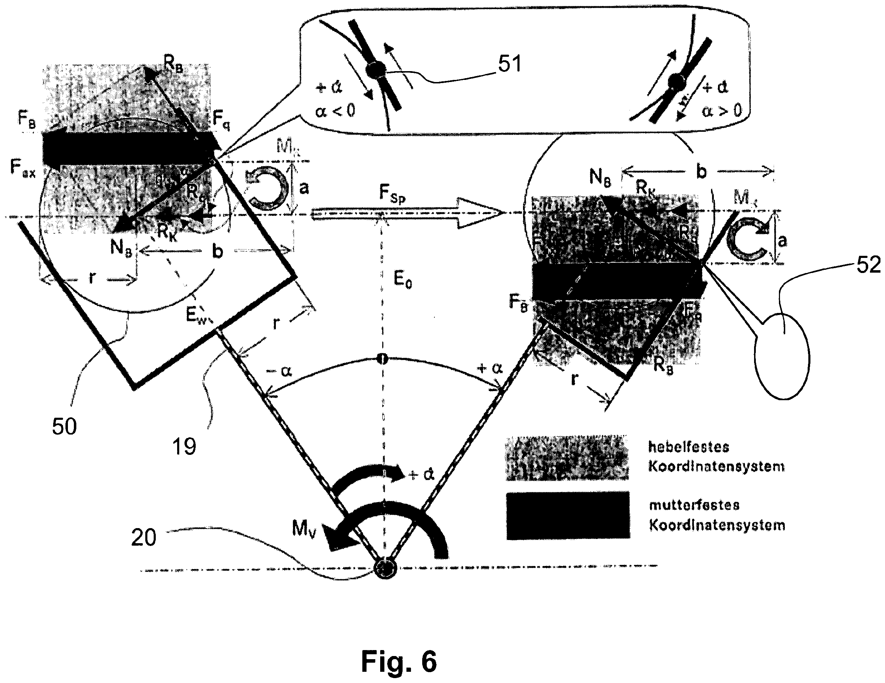

Fig. 6 zeigt eine Prinzipdarstellung der Ventilbaugruppe zur Veranschaulichung von Last- und Kräftebilanzen an dem Ventilgetriebe 18.

Das Hebelelement 19 bzw. der Hebelarm ist mit einem an dem Spindelgetriebe 18 bzw. einer Spindelmutter 50 verbunden und ist um die Ventilwelle 20 um einen Winkel α schwenkbar, wobei Fig. 6 zwei Positionen -α, +α zeigt.

An dem Berührungspunkt 51 zwischen Hebelelement 19 und einem am Spindelgetriebeteil 18 befindlichen Bolzen bestimmt die Relativbewegung die Vektorrichtung von R_{B}. Hierbei entsteht eine Hertzsche Pressung 52. M_{V}, und M_{K} kennzeichnen die Drehmomente an der Welle 20 und am Bolzen 50.

Hierbei bedeuten:
- F_{Sp} :: Antriebskraft der Spindel
- r :: Radius des Bolzens

Die beschriebene Lösung erlaubt:
- ein Verriegeln des Gasgenerators während einer Bodenhandlung sowie während eines Freifliegens,
- eine digitale Signalumwandlung von analogen Sensorsignalen,
- eine Drehbewegung des Gasgenerators während des Fluges in Abhängigkeit der durch die Elektronik gelieferten Winkelbefehle,
- eine Signalrückkopplung der Ventilstellung,
- eine sehr geringe Fehlertoleranz

Weitere Vorteile ist die Einsparung von ausgelagerten Funktionen, eine Reduzierung von Datenübertragungssystemen, eine Sicherstellung eines rückwirkungsfreien selbsttestfähigen Subsystems mit erheblichem Aufwuchspotenzial, z.B. mit Regelalgorithmen für das Staustrahltriebwerk, eine freie Konfigurierbarkeit der Regelparameter durch ein Download, eine Lastunempfindlichkeit durch eine äußerst robuste Charakteristik, insbesondere eine Beschleunigungsrückführung und Korrekturalgorithmen für eine Stromregelung.

### Bezugszeichenliste

- 1: Lenkflugkörper
- 2: Staustrahlantrieb
- 3: Triebwerkzwischenraum
- 4: Verbrennungskammer
- 5: Treibstoffkammer
- 6: Ventil
- 7: Ventilstelleinheit
- 8: Steuerelektronik-Einheit
- 9: Ventilsteuereinheit
- 10: Ventilbaugruppe
- 11: Baukörper
- 12: Aussparungen
- 13: Gehäuseteil
- 14: Gehäusedeckel
- 15: Elektromotorischer Antrieb
- 16: Servomotor
- 17: Gewindespindel
- 18: Spindelgetriebeteil
- 19: Hebelelement
- 20: Ventilwelle
- 21: Achse des Spindelantriebes
- 22: -
- 23: Hardwareteil
- 24: Hardware
- 25: DC-Versorgungseinheit
- 26: Datenbusanschluss
- 27: Testsignalanschluss
- 28: Sensoren
- 29: -
- 30: Spannungsversorgungs-Filter
- 31: DC/DC-Wandler
- 32: Halbleiterbrückenschaltung
- 33: Signalverarbeitungseinheit
- 34: Schnittstelle
- 35: Sensorschnittstelle
- 36: Strommesssensor
- 37: Winkelsensor
- 38, 39: Schnittstellen
- 40: Datenbus
- 41: Einheit
- 42: Signalleitungsmodul
- 43: Regelungsteil
- 44: Erste Einheit
- 45: Zweite Einheit

- 48: Sinusgeneratormodul
- 49: -
- 50: Spindelmutter, Bolzen
- 51: Berührungspunkt
- 52: Hertzsche Pressung
- # 1-4: Drucksensoren

- U: Umhüllung
- K: Kopfteil
- H1: Heckflügel
- H2: weitere Flügel
- A: Austrittsdüse
- P: Parameter
- V: Variable
- POS: Positionsregler
- VEL: Geschwindigkeitsregler
- ACC: Beschleunigungsregler
- RES: Geber-Signal-Aufbereitungsmodul
- OBS: Beobachter-Modul
- CDO: Modul
- CTR: Phasensollwerteinheit
- CCO: Korrekturregler
- CTM: Fehlererkennungseinheit
- CUR: Phasenstromregler
- BUS: Bufferüberwachung
- SUR: Steuerungsüberwachung
- MON: Realtimemonitor

## Patentansprüche

1. Staustrahlantrieb (2) umfassend einen Triebwerkzwischenraum (3) und ein Ventil (6) zur Steuerung einer für den Antrieb erforderlichen Treibstoffmenge, wobei das Ventil (6) mit einer Ventilstelleinheit (7) ausgeführt ist, die durch eine Steuerelektronik-Einheit (8) betätigbar ausgeführt ist, **dadurch gekennzeichnet, dass** das Ventil (6) mit der Ventilstelleinheit (7) und der Steuerelektronik-Einheit (8) zu einer thermisch isolierten Ventilbaugruppe (10) zusammengefasst sind, wobei die Ventilbaugruppe (10) in dem Triebwerkzwischenraum (3) angeordnet ist, und wobei die Ventilbaugruppe (10) in einem Baukörper (11) eingebettet ist, und der Baukörper (11) mit einem Gehäuseteil (13) mit einem einen Luftisolierspalt bildenden Gehäusedeckel (14) versehen ist.

2. Staustrahlantrieb (2) nach Anspruch 1, **dadurch gekennzeichnet, dass** die Ventilbaugruppe (10) durch einen Luftspalt isoliert in dem Triebwerkszwischenraum angeordnet ist.

3. Staustrahlantrieb (2) nach Anspruch 1, **dadurch gekennzeichnet, dass** die Ventilbaugruppe (10) in einer oder mehreren Aussparungen (12) des Baukörpers (11) eingebettet ist, wobei der Baukörper (11) als Formkörper ausgeführt ist.

4. Staustrahlantrieb (2) nach einem der vorhergehenden Ansprüche, **gekennzeichnet durch** einen elektromotorischen Antrieb (15), insbesondere mit einem Servomotor (16) umfasst, der mit einer Gewindespindel (17) verbunden ist, und dass an der Gewindespindel (17) ein in Längsrichtung der Gewindespindel (17) verschiebbares Spindelgetriebeteil (18) vorhanden ist, die mit einem Hebelelement (19) mit einer Ventilwelle (20) verbunden ist, wobei die Ventilwelle (20) einen 90°-Winkel zur Achse des Spindelantriebes definiert.

5. Staustrahlantrieb (2) nach einem der vorhergehenden Ansprüche, **dadurch gekennzeichnet, dass** die Steuerelektronik-Einheit (8) ein Regelungsteil (43) mit einer Phasensollwerteinheit (CTR), einem Korrekturregler (CCO) und einer Fehlererkennungseinheit (CTM) für polare Werte umfasst, wobei die Phasensollwerteinheit (CTR) an ihrem Eingang einerseits mit polarem Strom und/oder Spannungskommandos und andererseits mit einem Korrektursignal des Korrekturreglers (CCO) gespeist wird, wobei der Korrekturregler (CCO) mit der Fehlererkennungseinheit (CTM) verbunden ist sowie die Fehlererkennungseinheit (CTM) mit Soll- und Istwerten versorgt wird.

6. Staustrahlantrieb (2) nach einem der vorhergehenden Ansprüche, **dadurch gekennzeichnet, dass** die Steuerelektronik-Einheit (8) mit mindestens einer Sensoren-Schnittstelle (35) mit einer Signalverarbeitungseinheit (33) versehen ist.

7. Staustrahlantrieb (2) nach Anspruch 5, **dadurch gekennzeichnet, dass** die Steuerelektronik-Einheit (8) eine Potentialtrennung zwischen einer Halbleiterbrücke (32) und der Signalverarbeitungseinheit (33) aufweist.

8. Staustrahlantrieb (2) nach einem der vorhergehenden Ansprüche, **dadurch gekennzeichnet, dass** die Steuerelektronik-Einheit (8) Stromsensoren (36) zur Messung eines Motorstromes des Antriebsmotors aufweist, die zur Überwachung und/oder Korrektur des Motorstromes vorgesehen sind, wobei der Messstrom einer Signalverarbeitungseinheit (33) zugeführt wird.

9. Staustrahlantrieb (2) nach einem der vorhergehenden Ansprüche, **dadurch gekennzeichnet, dass** die Steuerelektronik-Einheit (8) eine PWM-Steuerung des Antriebsmotors beinhaltet.

10. Lenkflugkörper mit einem Staustrahlantrieb (2) nach einem der vorhergehenden Ansprüche.

## Claims

1. Ramjet drive (2) comprising an engine gap (3) and a valve (6) for controlling an amount of fuel required for the drive, the valve (6) being implemented with a valve adjustment unit (7), which is configured to be actuable by a control electronics unit (8), **characterised in that** the valve (6) is combined with the valve adjustment unit (7) and the control electronics unit (8) to form a thermally insulated valve assembly (10), the valve assembly (10) being arranged in the engine gap (3), the valve assembly (10) being embedded in a structure (11), and the structure (11) being provided with a housing part (13) comprising a housing cover (14) which forms an air insulation gap.

2. Ramjet drive (2) according to claim 1, **characterised in that** the valve assembly (10) is arranged in the engine gap so as to be insulated by an air gap.

3. Ramjet drive (2) according to claim 1, **characterised in that** the valve assembly (10) is embedded in one or more recesses (12) of the structure (11), the structure (11) being configured as a moulded body.

4. Ramjet drive (2) according to any of the preceding claims, **characterised by** an electric motor drive (15), in particular comprising a servo motor (16) which is connected to a threaded spindle (17), and in that a spindle transmission part (18) displaceable in the longitudinal direction of the threaded spindle (17) is present on the threaded spindle (17), which is connected to a lever element (19) comprising a valve shaft (20), the valve shaft (20) defining a 90° angle to the axis of the spindle drive.

5. Ramjet drive (2) according to any of the preceding claims, **characterised in that** the control electronics unit (8) comprises a regulation part (43) comprising a phase target value unit (CTR), a compensator (CCO) and an error detection unit (CRM) for polar values, the phase target value unit (CTR) being supplied at the input thereof with polar current and/or with voltage commands and also with a correction signal of the compensator (CCO), the compensator (CCO) being connected to the error detection unit (CTM) and the error detection unit (CTM) being supplied with target values and current values.

6. Ramjet drive (2) according to any of the preceding claims, **characterised in that** the control electronics unit (8) is provided with at least one sensor interface (35) comprising a signal processing unit (33).

7. Ramjet drive (2) according to claim 5, **characterised in that** the control electronics unit (8) has a potential separation between a semiconductor bridge (32) and the signal processing unit (33).

8. Ramjet drive (2) according to any of the preceding claims, **characterised in that** the control electronics unit (8) has current sensors (36) for measuring a motor current of the drive motor, which are provided to monitor and/or correct the motor current, the measurement current being supplied to a signal processing unit (33).

9. Ramjet drive (2) according to any of the preceding claims, **characterised in that** the control electronics unit (8) contains a PWM control system of the drive motor.

10. Guided missile comprising a ramjet drive (2) according to any of the preceding claims.

## Revendications

1. Statoréacteur (2) comprenant un espace intermédiaire de réacteur (3) et une vanne (6) destinée à commander une quantité de carburant nécessaire à la propulsion, dans lequel la vanne (6) est réalisée dotée d'une unité de réglage de vanne (7), laquelle est réalisée comme actionnable par une unité électronique de commande (8), **caractérisé en ce que** la vanne (6) est assemblée avec l'unité de réglage de vanne (7) et l'unité électronique de commande (8) en un ensemble de vanne (10) isolé thermiquement, dans lequel l'ensemble de vanne (10) est agencé dans l'espace intermédiaire de réacteur (3), et dans lequel l'ensemble de vanne (10) est incorporé dans une structure (11), et la structure (11) est prévue dotée d'une partie de carter (13) dotée d'un couvercle de carter (14) formant un interstice d'air isolant.

2. Statoréacteur (2) selon la revendication 1, **caractérisé en ce que** l'ensemble de vanne (10) est agencé dans l'espace intermédiaire de réacteur (3), isolé par un interstice d'air.

3. Statoréacteur (2) selon la revendication 1, **caractérisé en ce que** l'ensemble de vanne (10) est incorporé dans une ou plusieurs échancrures (12) de la structure (11), dans lequel la structure (11) est réalisée comme corps conformé.

4. Statoréacteur (2) selon l'une des revendications ci-dessus, **caractérisé par** un entraînement électromoteur (15), comprenant en particulier un servomoteur (16), lequel est raccordé à une broche filetée (17), et en ce qu'une pièce de transmission à broche (18) déplaçable dans le sens longitudinal de la broche filetée (17) est disposée sur la broche filetée, cette pièce étant raccordée à un arbre de vanne (20) avec un élément de levier (19), dans lequel l'arbre de vanne (20) dessine un angle de 90° avec l'axe de l'entraînement à broche.

5. Statoréacteur (2) selon l'une des revendications ci-dessus, **caractérisé en ce que** l'unité électronique de commande (8) comprend un élément de réglage (43) doté d'une unité de valeur de phase de consigne (CTR), un régulateur de correction (CCO) et une unité de reconnaissance d'anomalies (CTM) pour les valeurs polaires, dans lequel l'unité de valeur de phase de consigne (CTR) est alimentée à son entrée d'un côté avec des commandes polaires en tension et/ou en intensité et d'un autre côté avec un signal correcteur du régulateur de correction (CCO), dans lequel le régulateur de correction (CCO) est connecté à l'unité de reconnaissance d'anomalies (CTM) de même que des valeurs réelles et de consigne sont fournies à l'unité de reconnaissance d'anomalies (CTM).

6. Statoréacteur (2) selon l'une des revendications ci-dessus, **caractérisé en ce que** l'unité électronique de commande (8) est prévue dotée d'au moins une interface de capteur (35) dotée d'une unité de traitement du signal (33).

7. Statoréacteur (2) selon la revendication 5, **caractérisé en ce que** l'unité électronique de commande (8) comporte une séparation de potentiel entre un pont semi-conducteur (32) et l'unité de traitement du signal (33).

8. Statoréacteur (2) selon l'une des revendications ci-dessus, **caractérisé en ce que** l'unité électronique de commande (8) comporte des capteurs d'intensité (36) destinés à mesurer un courant moteur du moteur d'entraînement, lesquels sont prévus pour la surveillance et et/ou la correction d'un courant moteur, dans lequel le courant de mesure est conduit à l'unité de traitement du signal (33).

9. Statoréacteur (2) selon l'une des revendications ci-dessus, **caractérisé en ce que** l'unité électronique de commande (8) inclut une commande MLI du moteur d'entraînement.

10. Missile guidé doté d'un statoréacteur (2) selon l'une des revendications précédentes.
